(19) Europäisches Patentamt
European Patent Office
Office européen des brevets

(11) **EP 3 007 298 A1**

(12) **EUROPEAN PATENT APPLICATION**

(43) Date of publication:
**13.04.2016 Bulletin 2016/15**

(51) Int Cl.:
$H02J\ 3/24$ (2006.01)     $F03D\ 7/04$ (2006.01)
$H02J\ 3/38$ (2006.01)     $H02J\ 3/46$ (2006.01)

(21) Application number: **14187947.8**

(22) Date of filing: **07.10.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens Aktiengesellschaft**
**80333 München (DE)**

(72) Inventors:
• **Kleif, Bjarke**
  **7100 Vejle (DK)**
• **Stoettrup, Michael**
  **7400 Herning (DK)**

(54) **Generic frequency response for wind power systems**

(57) There is described a method of generating a power reference for a wind farm during a frequency response mode of operation, the wind farm comprising a plurality of wind turbines and being connected to a power grid. The method comprises (a) obtaining data representative of a first function, the first function defining a power reference differential value as a function of power grid frequency, (b) receiving a power grid frequency value, (c) calculating a first power reference contribution value based on the first function and the received power grid frequency value, (d) obtaining data representative of a second function, the second function defining a power reference offset value as a function of a wind farm operational power value, (e) receiving a wind farm operational power value, (f) calculating a second power reference contribution value based on the second function and the received wind farm operational power value, and (g) generating the power reference by adding the first power reference contribution value and the second power reference contribution value. Further, there are described a corresponding controller for a wind farm, a wind farm, a computer program, and a computer program product.

## FIG 2

**Description**

Field of Invention

The present invention relates to the field of wind power, in particular to a method of generating a power reference for a wind farm during a frequency response mode of operation, a controller for a wind farm, a wind farm, a computer program, and a computer program product.

Art Background

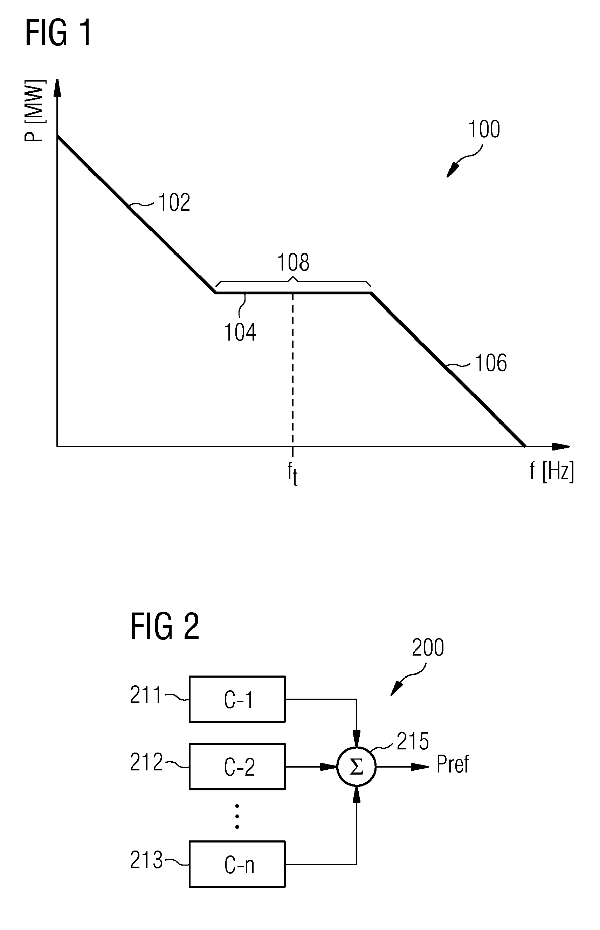

Country specific grid codes require wind farms to act upon changes in the grid frequency f in order to help stabilizing the grid. The primary reaction required by the wind farm is, as shown in figure 1, to regulate the amount of active power P that is supplied to the grid when the grid frequency f is outside a dead band 108 around the target frequency $f_t$. More specifically, as shown in figure 1, the active power is increased (curve segment 102) when the grid frequency f is below a lower limit of the dead band 108 and reduced (curve segment 106) when the grid frequency f is above an upper limit of the dead band 108. Secondary reactions include e.g. sensitivity towards changes in available power. The wind farm is said to be operating in frequency response mode, when the grid frequency is outside of the dead band.

Every time a new market opens up for wind farms or existing markets make changes to their grid code requirements, a new frequency response has to be designed and implemented in the control system for the corresponding wind farms. This is a cumbersome and time consuming task that incurs significant cost and labor.

There may be a need for a simple and flexible way of complying with varying grid codes.

Summary of the Invention

This need may be met by the subject matter according to the independent claims. Advantageous embodiments of the present invention are described by the dependent claims.

According to a first aspect of the invention there is provided a method of generating a power reference for a wind farm during a frequency response mode of operation, the wind farm comprising a plurality of wind turbines and being connected to a power grid. The method comprises (a) obtaining data representative of a first function, the first function defining a power reference differential value as a function of power grid frequency, (b) receiving a power grid frequency value, (c) calculating a first power reference contribution value based on the first function and the received power grid frequency value, (d) obtaining data representative of a second function, the second function defining a power reference offset value as a function of a wind farm operational power value, (e) receiving a wind farm operational power value, (f) calculating a second power reference contribution value based on the second function and the received wind farm operational power value, and (g) generating the power reference by adding the first power reference contribution value and the second power reference contribution value.

This aspect of the invention is based on the observation that the majority of grid code frequency responses consist of two or more contributions that can be calculated by applying specific versions of corresponding generic functions to operational parameter values, such as power grid frequency and a wind farm operational power value. More specifically, the power reference for a wind farm is generated by applying a first function to a power grid frequency value and a second function to a wind farm operational power value in order to calculate a first power reference contribution value and a second power reference contribution value, respectively. The power reference for the wind farm is obtained by summing the contribution values. The first function and the second function are respectively represented by configurable data, such that a specific grid code (or changes to an existing grid code) can be implemented in a simple and flexible manner by adapting the respective data.

In the present context, the term "power reference for a wind farm" may in particular denote the amount of active power that the wind farm is supposed to deliver to the power grid.

In the present context, the term "power reference differential value" may in particular denote a value (with sign) indicating the difference between a current power reference value and some predetermined power reference value.

In the present context, the term "power reference offset value" may in particular denote a power reference value that forms a static basis for the power reference value during frequency response.

In the present context, the term "wind farm operational power value" may in particular denote a value indicating an amount of power that is related to the wind farm during operation prior to entering the frequency response mode of operation.

The method according to the first aspect generates a power reference by adding two power reference contribution values, i.e. a power reference differential value calculated by applying a first function to the grid frequency and a power reference offset value calculated by applying a second function to the wind farm operational value. In other words, the power reference is calculated as a sum of a static offset value and a frequency dependent differential value. The first and second functions are represented by data that may e.g. be stored in a memory of a wind farm control system. By manipulating the data, an operator may easily adapt the frequency response of a wind farm in response to certain requirements (grid code) from a grid operation. When a frequency response is required, i.e. when the power grid frequency is outside of a predetermined dead band, the most recent data will be used by the method such that a frequency response is provided in accordance with the corresponding grid code.

Thus, the method according to the first aspect provides a generic way of generating a frequency response in view of configurable data that defines the first and second functions. Accordingly, cumbersome re-implementations due to new or changed grid codes are replaced by a simple configuration of the data representing the two functions.

According to an embodiment of the invention, the first function comprises a percentage function of power grid frequency.

In the present context, the term "percentage function of power grid frequency" may in particular denote a function that returns a percentage for a given power grid frequency value.

According to a further embodiment of the invention, the percentage function is multiplied by a scaling factor.

By forming the first function as the product of a scaling factor and a percentage function, a differential value is calculated, which indicates the additional amount of power (with sign) that is to be produced in order to provide the desired frequency response.

According to a further embodiment of the invention, the scaling factor is a value selected from the group consisting of (a) the last measured power value before entering the frequency response mode of operation, (b) total rated power, (c) total rated power for available wind turbines, and (d) the minimum value of scheduled power and available power.

In other words, the frequency dependent differential value will be calculated as a percentage of a known power value, i.e. the measured power value prior to the frequency response (also referred to as $P_{last, measured, inband}$), the total rated power of the wind farm (also referred to as $P_{rated, total}$), the total rated power for the currently available wind turbines in the wind park (also referred to as $P_{rated, inscope}$), or the minimum of scheduled and available power, i.e. min ($P_{scheduled}$, $P_{available}$).

According to a further embodiment of the invention, the data representative of the first function comprises a plurality of interpolation points.

The interpolation points are a simple and efficient way of defining a function of frequency. For any given value of power grid frequency that does not coincide with one of the interpolation points, a corresponding function value is calculated by applying interpolation.

According to a further embodiment of the invention, the interpolation points are absolute value points or droop points.

In the present context, the term "absolute value points" may in particular denote pairs of corresponding frequency and function values.

In the present context, the term "droop points" may in particular denote an amount of relative change from a given frequency value to the frequency value of the next droop point in a given direction or for all frequency values in said direction.

The functional value corresponding to a grid frequency that does not coincide with one of the interpolation points may e.g. be calculated by applying linear interpolation or any other suitable higher order form of interpolation, to one or more interpolation points in the vicinity of the grid frequency value.

According to a further embodiment of the invention, the method further comprises (a) obtaining data representative of a third function, the third function defining a power reference differential value as a function of scheduled power, (b) receiving a scheduled power value, and (c) calculating a third power reference contribution value based on the third function and the received scheduled power value, wherein the step of generating the power reference further comprises adding the third power reference contribution value.

In this embodiment, a third power reference contribution value is added to the sum of the first and second contribution values. The third power reference contribution value is calculated based on a scheduled power value.

In this embodiment, a change in the scheduled power value that occurs during a frequency response may be taken into consideration. Thereby, a grid operator can control the wind farm output power manually, even when the automated frequency response mode of operation is active.

As an example, the third power reference contribution value may be calculated as the difference between the new scheduled power value and the scheduled power value prior to the frequency response, i.e. as $P_{scheduled} - P_{scheduled, inband}$.

According to a further embodiment of the invention, the method further comprises (a) obtaining data representative of a fourth function, the fourth function defining a power reference differential value as a function of available power, (b) receiving an available power value, and (c) calculating a fourth power reference contribution value based on the fourth function and the received available power value, wherein the step of generating the power reference further comprises adding the fourth power reference contribution value.

In this embodiment, a fourth power reference contribution value is added to the sum of the first and second (and possibly third) contribution values. The fourth power reference contribution value is calculated based on a value of available power.

In this embodiment, a change in the amount of available power that occurs during a frequency response may be taken into consideration. Thereby, if the available power increases (e.g. due to increased wind), the frequency response may be correspondingly increased if needed by the grid operator. Similarly, if the available power decreases (e.g. due to less wind), the frequency response may be reduced accordingly in order to protect the wind turbines of the wind farm.

As an example, the fourth power reference contribution value may be calculated as the difference between the new available power value and the available power value prior to the frequency response, i.e. as $P_{available} - P_{available, inband}$.

According to a second aspect of the invention, there is provided a controller for a wind farm comprising a plurality of wind turbines and being connected to a power grid. The controller is adapted to generate a power reference for the wind farm during a frequency response mode of operation by performing the method according to the first aspect or any of the above embodiments.

The controller is essentially a hardware implementation of the method according to the first aspect. That is, the controller comprises memory and processing units. The memory stores the data representative of the first and second and, optionally, third and/or fourth functions. The processing unit is capable of performing the method according to the first aspect and the above embodiments thereof. In particular, the controller is capable of detecting that a frequency response is needed, i.e. that the power grid frequency is outside the dead band, and to generate a corresponding power reference for the wind farm as discussed above.

According to a third aspect of the invention, there is provided a wind farm. The wind farm is connectable to a power grid and comprises (a) a plurality of wind turbines, and (b) a controller according to the second aspect.

The wind farm according to this aspect is based on the same idea as the first and second aspects discussed above.

According to a fourth aspect of the invention there, is provided a computer program comprising computer executable instructions which, when executed by a computer processing unit, causes the computer to perform the method according to the first aspect or any of the above embodiments.

The computer program may be installed on a conventional wind park controller in order to implement the present invention.

According to a fifth aspect of the invention, there is provided a computer program product comprising a computer readable data carrier loaded with the computer program according to the fourth aspect.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

Brief Description of the Drawing

Figure 1 shows a typical frequency response for a wind farm connected to a power grid.

Figure 2 shows a block diagram indicating the principle of calculating a power reference for a wind farm during a frequency response mode of operation in accordance with an embodiment of the present invention.

Figure 3 shows an implementation of a percentage function in terms of absolute interpolation points in accordance with an embodiment of the present invention.

Figure 4 shows an implementation of a percentage function in terms of droop points in accordance with an embodiment of the present invention.

Detailed Description

The illustration in the drawing is schematic. It is noted that in different figures, similar or identical elements are provided with the same reference numerals or with reference numerals which differ only within the first digit.

Figure 1 shows a typical frequency response 100 for a wind farm connected to a power grid. As discussed in the introduction, the amount of active power P (corresponding to the power reference supplied to the wind farm) that is supplied to the grid is regulated when the grid frequency f is outside a dead band 108 around the target frequency $f_t$ (typically 50 or 60 Hz). More specifically, as shown in figure 1, the active power is increased (as indicated by curve segment 102) when the grid frequency f is below a lower limit of the dead band 108 and reduced (as indicated by curve segment 106) when the grid frequency f is above an upper limit of the dead band 108. When the grid frequency f is within the dead band 108, the power reference remains independent of the grid frequency f as indicated by the horizontal curve segment 104.

Figure 2 shows a block diagram 200 indicating the principle of calculating a power reference for a wind farm during a frequency response mode of operation in accordance with an embodiment of the present invention.

More specifically, a total of n power reference contribution values C-1, C-2, ... C-n are calculated by the respective blocks 211, 212 and 213 and summed by adder 215 to provide the resulting power reference $P_{ref}$. The number n of power reference contribution values may be any integer number equal to or larger than 2.

Some embodiments of the present invention rely on calculation of two power reference contribution values. The first of the two power reference contribution values is calculated as the product of a scaling factor and a percentage function that depends on the grid frequency, i.e.

$$\texttt{P}_1 \texttt{ = P}_1\texttt{(f) = K*pct(f).}$$

The scaling factor K may e.g. be the last measured active power before entering the frequency response mode of operation, $P_{last, \, measured, \, inband}$ or the rated power of the wind farm, $P_{rated, \, total}$. Other possibilities include the total rated power for currently available wind turbines, $P_{rated, \, inscope}$, and the minimum value of scheduled power and available power, i.e. min ($P_{scheduled}$, $P_{available}$).

The percentage function pct(f) is a function that returns a certain percentage value for any given power grid frequency. The percentage value for a given frequency indicates the sign and amount of the first power reference contribution value with the scaling factor K as reference. Thus, for frequencies below the lower limit of the dead band, where the amount of active power P has to be increased, the percentage function pct(f) will return a positive percentage value, such that the first power reference contribution value will be positive. Similarly, for frequencies above the upper limit of the dead band, where the amount of active power P has to be decreased, the percentage function pct(f) will return a negative percentage value, such that the first power reference contribution value will be negative in this case.

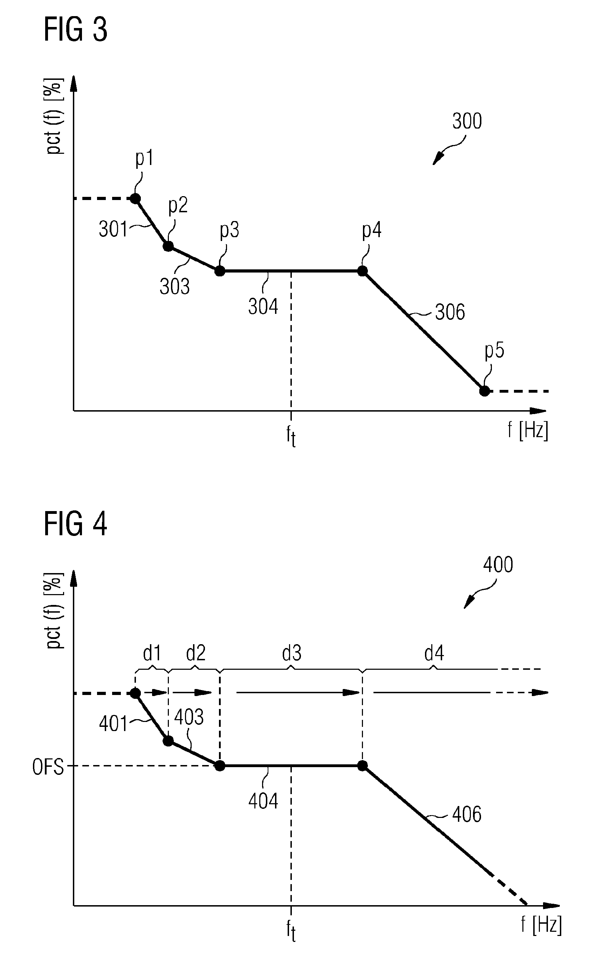

The percentage function is preferably stored as a set of data in memory of the wind farm controller, e.g. as a set of interpolation points as discussed in more detail below in conjunction with figures 3 and 4.

The second of the two power reference contribution values is a power reference offset value, $P_{offset}$, that is calculated as a function of an operation power value for the wind farm, e.g. the last measured active power before entering the frequency response mode of operation, $P_{last, \, measured, \, inband}$ or the minimum value of scheduled power and available power, i.e. min ($P_{scheduled}$, $P_{available}$).

Accordingly, in this embodiment, the total power reference $P_{ref}$ for the wind farm is calculated as

$$\texttt{P}_{\texttt{ref}} \texttt{ = K*pct(f) + P}_{\texttt{offset}}\texttt{.}$$

Further embodiments may include additional power reference contribution values.

A third power reference contribution value is a function of scheduled power, e.g. the difference between a current scheduled power value and the scheduled power value prior to the frequency response, i.e. $P_{sch} - P_{sch, \, inb}$.

In this case, the total power reference $P_{ref}$ for the wind farm is calculated as

$$\texttt{P}_{\texttt{ref}} \texttt{ = K*pct(f) + P}_{\texttt{offset}} \texttt{ + P}_{\texttt{sch}}\texttt{-P}_{\texttt{sch, inb}}\texttt{.}$$

A fourth power reference contribution value is a function of available power, e.g. the difference between a current available power value and the available power value prior to the frequency response, i.e. $P_{ava}-P_{ava, \, inband}$.

In this case, the total power reference $P_{ref}$ for the wind farm is calculated as

$$P_{ref} = K*pct(f) + P_{offset} + (P_{sch} - P_{sch,\ inb}) + (P_{ava} - P_{ava,\ inb}),$$

or as

$$P_{ref} = K*pct(f) + P_{offset} + (P_{ava} - P_{ava,\ inb}).$$

Figure 3 shows an implementation 300 of the percentage function pct(f) in terms of absolute interpolation points in accordance with an embodiment of the present invention.

As shown in figure 3, the percentage function pct(f) is represented by five interpolation points p1, p2, p3, p4, and p5. The interpolation points p1, p2, p3, p4, p5 are absolute in the sense that each point corresponds to a specific set of frequency and percentage value. For frequencies between two interpolation points p1, p2, p3, p4, p5, a corresponding percentage value may be calculated by linear interpolation along curve segments 301, 303, 306. Curve segment 304 corresponds to the dead band (108 in figure 1). Below the leftmost interpolation point p1 and the rightmost interpolation point p5, the percentage function pct(f) is flat, i.e. it does not change. It should be noted that fewer or more interpolation points may be used. However, in order to properly define the dead band, at least two interpolation points are necessary. Figure 4 shows an implementation 400 of the percentage function pct(f) in terms of droop points in accordance with an embodiment of the present invention.

More specifically, figure 4 shows how a percentage function similar to the one shown in figure 3 can be implemented by four droop points d1, d2, d3, d4 and a droop offset OFS instead of the five absolute interpolation points p1, p2, p3, p4, p5 shown in figure 3. More specifically, each droop point d1, d2, d3, d4 consists of a frequency value and a droop indicating the slope of the percentage function pct(f) in the direction indicated by the horizontal arrows.

The droop may be defined in either of two ways:

Droop definition 1 (D1): [droop/Hz]
Droop definition 2 (D2): [100%/(droop-$f_t$)].

The droop point is therefore a definition of change in percentage from a defined frequency to all higher frequencies or to the neighboring defined higher frequency. As in the above case with absolute interpolation points p1, p2, p3, p4, p5, a minimum of two frequencies are required to define the dead band 404. In order to perform interpolation based on the droop points d1, d2, d3, d4 shown in figure 4, the points are calculated from the origin, which is determined by the target frequency $f_t$ and the droop offset OFS. The points are calculated outwards from the target frequency, in both increasing and decreasing frequency directions.

To illustrate the above, the following values are assumed:

$f_t$ = 50 Hz
OFS = 0%
d1 = (20%, 48.0 Hz)
d2 = (10%, 49.0 Hz)
d3 = (00%, 49.5 Hz)
d4 = (15%, 50.5 Hz)

In this case, the resulting points will be as shown in the table below, where D1 and D2 refer to the above droop definitions:

TABLE 1

|    | f | D1 | D2 |
|----|------|-------|------|
| P3 | 49.5 Hz | 0% | 0% |
| P2 | 49.0 Hz | 5% | 10% |
| P1 | 48.0 Hz | 25% | 20% |
| P4 | 50.5 Hz | 0% | 0% |
| P5 | 52.0 Hz | -22.5% | -20% |

Some grid codes require the operator to limit the frequency response to only act in case of over or under frequencies, also known as LFSM (Limited Frequency Sensitive Mode). With the present invention, this may be achieved by maintaining two pct(f) functions, i.e. one for over frequencies (frequencies above dead band upper limit) and another for under frequencies (frequencies below dead band lower limit) and switch between the two. Another more simple way would be to let the frequency response act only in case of an over frequency situation, only in case of an under frequency situation, or in both cases. The latter may be implemented in the part of the wind farm controller that initiates the frequency response mode of operation.

Furthermore, some grid codes require the operator to configure a hysteresis for allowing output from the frequency response function to increase again after a high frequency has been measured. More specifically, if the measured frequency exceeds a particular threshold frequency $f_{high\ wait}$, the output of the frequency response function should not be allowed to increase until the frequency gets below high another threshold frequency $f_{high\_cancel}$.

In summary, the present invention provides a simple and flexible way of configuring frequency response in accordance with varying grid codes by storing/manipulating a simple set of data that represent a number of power reference contribution functions.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. A method of generating a power reference for a wind farm during a frequency response mode of operation, the wind farm comprising a plurality of wind turbines and being connected to a power grid, the method comprising
   obtaining data representative of a first function, the first function defining a power reference differential value as a function of power grid frequency,
   receiving a power grid frequency value,
   calculating a first power reference contribution value based on the first function and the received power grid frequency value,
   obtaining data representative of a second function, the second function defining a power reference offset value as a function of a wind farm operational power value,
   receiving a wind farm operational power value,
   calculating a second power reference contribution value based on the second function and the received wind farm operational power value, and
   generating the power reference by adding the first power reference contribution value and the second power reference contribution value.

2. The method according to the preceding claim, wherein the first function comprises a percentage function of power grid frequency.

3. The method according to the preceding claim, wherein the percentage function is multiplied by a scaling factor.

4. The method according to the preceding claim, wherein the scaling factor is a value selected from the group consisting of (a) the last measured power value before entering the frequency response mode of operation, (b) total rated power, (c) total rated power for available wind turbines, and (d) the minimum value of scheduled power and available power.

5. The method according to any of the preceding claims, wherein the data representative of the first function comprises a plurality of interpolation points.

6. The method according to the preceding claim, wherein the interpolation points are absolute value points or droop points.

7. The method according to any of the preceding claims, further comprising
   obtaining data representative of a third function, the third function defining a power reference differential value as a function of scheduled power,
   receiving a scheduled power value, and
   calculating a third power reference contribution value based on the third function and the received scheduled power value,

wherein the step of generating the power reference further comprises adding the third power reference contribution value.

8. The method according to any of the preceding claims, further comprising
obtaining data representative of a fourth function, the fourth function defining a power reference differential value as a function of available power,
receiving an available power value, and
calculating a fourth power reference contribution value based on the fourth function and the received available power value,
wherein the step of generating the power reference further comprises adding the fourth power reference contribution value.

9. A controller for a wind farm comprising a plurality of wind turbines and being connected to a power grid, the controller being adapted to generate a power reference for the wind farm during a frequency response mode of operation by performing the method according to any of the preceding claims.

10. A wind farm, the wind farm being connectable to a power grid and comprising
a plurality of wind turbines, and
a controller according to the preceding claim.

11. A computer program comprising computer executable instructions which, when executed by a computer processing unit, causes the computer to perform the method according to any of claims 1 to 8.

12. A computer program product comprising a computer readable data carrier loaded with the computer program according to the preceding claim.

# FIG 1

# FIG 2

## FIG 3

## FIG 4

Europäisches
Patentamt

European
Patent Office

Office européen
des brevets

# EUROPEAN SEARCH REPORT

Application Number

EP 14 18 7947

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | KR 101 398 400 B1 (NAT UNIV CHONBUK IND COOP FOUN [KR]) 27 May 2014 (2014-05-27)<br>* the whole document *<br>& US 8 922 043 B1 (KANG YONG CHEOL [KR] ET AL) 30 December 2014 (2014-12-30)<br>* page 1, column 1, line 8 - line 37 *<br>* page 1, column 2, line 7 - line 13 *<br>* page 2, line 54 - column 4, line 48 *<br>* column 6, line 50 - column 7, line 21; figures 1-5 * | 1-3,9-12<br><br>4-8 | INV.<br>H02J3/24<br>F03D7/04<br>H02J3/38<br>H02J3/46 |
| X | WANG, Ye: "Evaluation de la performance des réglages de fréquence des éoliennes à l'échelle du système électrique: application à un cas insulaire",<br>Thèse de doctorat délivré par l' école centrale de Lille<br>,<br>20 November 2012 (2012-11-20),<br>XP002738267,<br>Retrieved from the Internet:<br>URL:https://tel.archives-ouvertes.fr/tel-0 0778698/document<br>* Chapters 3-5 * | 1,9-12 | |
| A | LE-REN CHANG-CHIEN ET AL: "Dynamic Reserve Allocation for System Contingency by DFIG Wind Farms",<br>IEEE TRANSACTIONS ON POWER SYSTEMS, IEEE SERVICE CENTER, PISCATAWAY, NJ, US,<br>vol. 23, no. 2, 1 May 2008 (2008-05-01),<br>pages 729-736, XP011207312,<br>ISSN: 0885-8950<br>* Section: IV;<br>figure 1 * | 1-12 | |

TECHNICAL FIELDS
SEARCHED (IPC)

H02J
F03D

-/--

The present search report has been drawn up for all claims

| Place of search | Date of completion of the search | Examiner |
|---|---|---|
| Munich | 10 April 2015 | Chaumeron, Bernard |

EPO FORM 1503 03.82 (P04C01)

Europäisches
Patentamt

European
Patent Office

Office européen
des brevets

# EUROPEAN SEARCH REPORT

Application Number

EP 14 18 7947

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANDRIAMALALA R N ET AL: "Power hardware in the loop simulation of wind farm contribution to grid frequency control", 2013 15TH EUROPEAN CONFERENCE ON POWER ELECTRONICS AND APPLICATIONS (EPE), IEEE, 2 September 2013 (2013-09-02), pages 1-8, XP032505384, DOI: 10.1109/EPE.2013.6634340 [retrieved on 2013-10-16] * Introduction; figure 1 * | 1-12 | |
| A | ANDREW BUCKSPAN ET AL: "Combining droop curve concepts with control systems for wind turbine active power control", POWER ELECTRONICS AND MACHINES IN WIND APPLICATIONS (PEMWA), 2012 IEEE, IEEE, 16 July 2012 (2012-07-16), pages 1-8, XP032245184, DOI: 10.1109/PEMWA.2012.6316403 ISBN: 978-1-4673-1128-1 * Section I, II; figure 5 * | 1-12 | |
| A | TIL KRISTIAN VRANA ET AL: "Active power control with undead-band voltage &p frequency droop applied to a meshed DC grid test system", ENERGY CONFERENCE AND EXHIBITION (ENERGYCON), 2012 IEEE INTERNATIONAL, IEEE, 9 September 2012 (2012-09-09), pages 612-616, XP032466746, DOI: 10.1109/ENERGYCON.2012.6348225 ISBN: 978-1-4673-1453-4 * Introduction; figures 1,3 * | 1-12 | |

TECHNICAL FIELDS SEARCHED (IPC)

-/--

The present search report has been drawn up for all claims

| Place of search | Date of completion of the search | Examiner |
|---|---|---|
| Munich | 10 April 2015 | Chaumeron, Bernard |

EPO FORM 1503 03.82 (P04C01)

Europäisches
Patentamt

European
Patent Office

Office européen
des brevets

# EUROPEAN SEARCH REPORT

**Application Number**

EP 14 18 7947

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RODRIGUEZ-AMENEDO ET AL: "Automatic generation control of a wind farm with variable speed wind turbines", IEEE TRANSACTIONS ON ENERGY CONVERSION, vol. 17, no. 2, 7304837, 1 June 2002 (2002-06-01), pages 279-284, XP002738268, USA DOI: 10.1109/tec.2002.1009481 * Section V; figure 3 * | 1-12 | |

-----

TECHNICAL FIELDS
SEARCHED     (IPC)

The present search report has been drawn up for all claims

| Place of search | Date of completion of the search | Examiner |
|---|---|---|
| Munich | 10 April 2015 | Chaumeron, Bernard |

EPO FORM 1503 03.82 (P04C01)

## ANNEX TO THE EUROPEAN SEARCH REPORT
## ON EUROPEAN PATENT APPLICATION NO.

EP 14 18 7947

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2015

| Patent document cited in search report | | Publication date | Patent family member(s) | | Publication date |
|---|---|---|---|---|---|
| KR 101398400 | B1 | 27-05-2014 | JP<br>KR<br>US | 5664889 B1<br>101398400 B1<br>8922043 B1 | 04-02-2015<br>27-05-2014<br>30-12-2014 |

EPO FORM P0459

For more details about this annex : see Official Journal of the European Patent Office, No. 12/82